# EUROPEAN PATENT APPLICATION

(11) **EP 1 087 314 A2**
(43) Date of publication of application: **28.03.2001**
(21) Application number: 00203239.9
(22) Date of filing: 19.09.2000
(51) Int. Cl.: G06F 17/60

(54) **Alternative use of finacial systems for customer data**

(30) Priority: 23.09.1999 US 155677 P
(71) Applicant: Citishare Corporation, New York, New York 11120 (US)
(72) Inventor: Hooper, William D., New Hope, Pennsylvania 18938 (US)
(74) Representative: Hynell, Magnus

(57) **Abstract**

The invention relates to systems and methods for utilizing the computer network infrastructure of a financial services institution to provide real-time access to data associated with an individual, the data not directly related to the individual's financial records and accounts. In an embodiment of the present invention, identification and/or personal data for an individual is stored as part of a customer account database in a financial services institution's network. Appropriate security measures are utilized to safeguard the maintenance and/or release of the identification data and/or personal data. The identification data and/or personal data may be released to civil agencies and/or other third parties, e.g. health care institutions, approved by the customer of the financial services institution and/or by any applicable governmental regulations. Also disclosed are credit/ATM/debit/smart cards issued by a financial services institution that comprise identification or personal data for an individual.

## Description

### Cross Reference to Related Applications:

The present application claims priority under 35 USC 119 from US provisional patent application serial number 60/155,677, filed September 23, 1999, entitled "Identification Method", the disclosure of which is hereby incorporated herein by reference.

### Field of the Invention:

The present invention relates broadly to alternative uses of a financial services system database and network for maintaining electronic data and records of importance to customers of a financial institution. The electronic data and records comprise data not directly related to services provided by the financial services institution and may be accessible in real time for use by the customer and/or civil agencies. In an embodiment of the present invention, identification data for a first individual is obtainable through the data maintained in the records system of a financial services institution for a second individual. By way of example, in a possible embodiment of the present invention, identification data, for example a photograph or a biometric data, for a child is maintained in and obtainable through financial account data of the child's parent.

### Background:

The financial services industry has developed sophisticated multi-national computer networks and systems. These systems may include one or more of the following features: large, high volume data processing and storage capability; call centers; customer service; global internetworking; and remote access, including through card reading equipment, telephones, personal computers, web enabled devices and the like. These sophisticated networks allow customer data to be rapidly retrieved and forwarded to local network users.

Today, virtually everyone in the United States and many people in other major industrialized countries carries a standard credit card, debit card and/or bank card. These cards contain a magnetic or optically readable media strip on one side that is used to access and communicate with a central computer system maintained by a financial services institution. Other embodiments of cards include smart cards that comprise storage devices such as memory chips that include data.

The financial services industry has developed means for including photographic images on credit cards, debit cards, ATM cards, smart cards and the like. Traditionally the photographs are utilized by a financial services institution to identify the cardholder and prevent fraud. The photographs may be digitized and stored as electronic data on a network that may be remotely accessed by network users to call up and use the photographs. For example, a bank teller at a remote terminal could call up an electronically stored photographic image to verify the identity of an individual cashing a check on their account. Although photographic images have been utilized within the financial services industry for identification purposes in the rendering of financial services, they have not generally been utilized for other purposes.

Computer systems and networks are also becoming commonplace in civil service agencies, for example in the law enforcement arena. Many police forces have installed mobile data terminals in their police cruisers. These mobile data terminals allow police officers to rapidly retrieve information from the law enforcement network computer systems while away from their desks and on patrol.

As part of their duties, law enforcement and other civil agencies may be called upon to locate missing individuals. Types of missing individuals include lost, missing and/or kidnapped children. More senior individuals may also become lost, or missing, as their mental faculties are lost due to illness or disease. Speed is often of the essence in locating missing individuals, the more quickly that identification data about the missing individual can be made available to searchers from law enforcement and other civil agencies, the better chance the searchers have of finding the individual.

### Summary of the Invention:

The present invention provides systems that allow the use, including the real-time use of data from a financial services network database for alternative, non-financial uses important to a customer of the financial institution.

In an aspect, the present invention provides a system for the identification of individuals using the computer networks of the financial services industry. According to the present invention, a financial services industry database record for a first individual comprises identification data for at least a second individual.

In general, a financial services industry database record for an individual may comprise one or more of the following data types: account data identification data for the account holders; credit data; transaction data and the like. The record may further comprise other data generally found in databases. A general discussion of types of data maintained in database records of the financial services industry is found is set forth in the following more detailed description.

According to the present invention, the database record for the first individual further comprises identification data for at least a second individual other than the first individual account holder. The identification data may include digitized photographic images, biometric data, finger print data, digitized voice data and the like, for the second individual. The biometric data may include blood type, eye scan data, dental data and/or the like. The identification data may further include at least one or more of the following types of data relating to the second individual: name; address; telephone number; emergency medical information; next of kin; and/or emergency contact information. The identification data is linked so, for example, the finger print data is associated with the second individual's name, address, phone number etc. The identification data may be compressed, encrypted or treated in other manners known to the art for handling within the financial services industry's network. The identification data for the first individual may be the same or different than the identification data for the second individual.

When needed, for example in an emergency situation where the second individual is reported missing, the identification data for the second individual is accessible by networks and network users outside the financial services industry network where the database is maintained. For example, in the case where the second individual is missing, the identification data for the second individual that is maintained in the financial services industry database may be made available to civil agencies, such as law enforcement agencies, through a transfer of the identification data for the second person into a computer network accessible by personnel in the civil service agency. In an embodiment of the present invention, the first individual initiates the transfer of the second individual's identification data to a network outside the financial services industry network. In an alternate embodiment, the first individual pre-authorizes the release of the second individual's identification data upon the occurrence of certain events. These events could include, the filing of a missing person's report, an emergency situation involving an accident, or the like. The identification data may also be utilized, if necessary, in forensic applications. As will be understood by those of ordinary skill in the art familiar with the computer systems and networks used in the financial services industry, the present invention may be implemented in a wide variety of ways.

In a first aspect, the present invention may be implemented with a savings, checking, loan, brokerage and/or credit account of an individual. In an embodiment of this type, a database record for the account of a first individual comprises identification data for at least a second individual. The identification data for the second individual is maintained as part of the account in the database record for the account. If needed, the identification data may be transferred in electronic form, or otherwise accessed, by personnel in a civil service agency in the manners described above.

Another aspect of the present invention is a credit card account of the type issued by a financial institution. The credit card account data is stored in the financial institution's computer database. The credit card account data comprises financial and identification data for a first individual who is the account holder. According to the present invention, the credit card account data further comprises identification data for a second individual, known to the first individual account holder. For example, the first individual credit card/account holder could elect to have their credit card account data include electronic identification data of their children. The data may be accessed to identify a child if the child is lost or kidnapped etc. In addition, the data may be transferred in electronic form to other networks such as the national and/or international law enforcement computer systems and widely distributed.

This embodiment of the present invention utilizes the existing infrastructure of the financial services industry in the credit/debit/ATM/smart card area to provide services that are not currently being offered by financial institutions but could provide substantial benefit to the public. The existing computer software/hardware infrastructure includes large, high volume data processing and storage capability, call centers, customer service, global internetworking, remote access, and the ability to produce plastic cards with images and other electronic data stored on them. Existing technology may be utilized to create small thumbnail photos and compress them with identifying data so that they take up minimal storage space in a database. When needed the photos may be called up from the database and electronically transferred through existing data networks to police departments, hospitals and/or other such agencies.

A further aspect of the present invention is a smart card issued by a financial services institution to a first individual, the smart card comprising memory sufficient to hold a database. According to the present invention, in addition to comprising data relating to the first individual, the database further comprises identification data for a second individual. The data relating to the first individual may be accessed and used by the financial services institution in connection with the first individual's account or accounts. The identification data relating to the second individual is accessible to data networks of civil agencies, such as police departments, fire departments, hospitals and/or other such agencies. In certain embodiments, the identification data relating to the second individual may also be accessed and stored by the financial services institution's network, for example in a database field linked to the first individual's data.

In embodiments of the present invention wherein a first individual is issued a card, for example an ATM, debit, credit or smart card associated with the first individual's account, the card may comprise identification data for the second individual. By way of example, the credit card of the first individual may comprise a photograph of the second individual. This feature of the present invention offers further advantages to the first individual as the card may be used as an initial means of providing identification data for the second individual. In a parent/child situation, the parent's credit card could contain a photograph of the child that the parent would be able to show immediately to a searcher if the child became lost.

An additional aspect of the present invention is a method for identifying individuals. A method of the present invention comprises creating a database record comprising identification data for a second individual in a financial services database associated with a first individual; transferring the database record to a person seeking to identify the second individual and comparing the identification data for the second individual to a person believed to be the second individual to determine whether the person is the second individual. Methods of the present invention may be implemented utilizing the systems of the present invention.

In another aspect, the present invention provides a system for maintaining data important to a customer utilizing the computer networks of the financial services industry. According to the present invention, a financial services industry database record for an individual comprises personal data other than data related to the financial relationship between the individual and the financial services institution. Examples of personal data include, but are not limited to: health care data next of kin data; insurance data; identification data; and the like.

The identification data may comprise the types of identification data set forth above and in detail below.

Health care data may comprise data relating to the medical condition of the individual, for example one or more of the following: allergies, blood type, organ donation information, disease information, prescription medicine data, and other types of information commonly found in health care records. The health care data preferably includes data that would be relevant to a health care professional in an emergency situation.

The health care data may further comprise health care insurance data. The health care insurance data may comprise one or more of the following types of data: health plan data, physician data, co-payment data, prescription plan data and/or similar types of data generally maintained by the health care insurance industry. The health care insurance data preferably includes data that would be utilized by a health care provider when admitting a patient for health care services.

The next of kin data may comprise identification data for the individual's next of kin. The insurance data may comprise data relating to the individual's insurance policies, including one or more of the following policies: home owner's insurance, vehicle insurance, personal liability insurance, legal insurance and/or life insurance.

Embodiments of aspects of the present invention utilizing personal data of an individual customer may be implemented with a savings, checking, loan, brokerage and/or credit account of the individual. In an embodiment of this type, a database record for the account of an individual comprises the personal data. The personal data is maintained as part of the account in the database record for the account. If needed, the personal data may be transferred in electronic form, or otherwise accessed, by personnel in a civil service agency in the manners described above.

In another embodiment of this aspect of the present invention a credit card account of the type issued by a financial institution comprises the personal data. The credit card account data is stored in the financial institution's computer database. The credit card account data comprises financial and identification data for the individual account holder. According to the present invention, the credit card account data further comprises personal data of the type set forth above for the account holder. For example, the individual credit card/account holder could elect to have their credit card account data include health insurance data. The health insurance data may be accessed by a health care provider if the individual needs health care services. In addition, the data may be transferred in electronic form to other networks such as a network maintained by the health care insurance provider.

These embodiments of the present invention also utilize the existing infrastructure of the financial services industry in the credit/debit/ATM/smart card area to provide services that are not currently being offered by financial institutions but could provide substantial benefit to the public. The existing computer software/hardware infrastructure includes large, high volume data processing capability, call centers, customer service, and the ability to produce plastic cards with images and other electronic data stored on them.

A further embodiment of this aspect of the present invention is a smart card issued by a financial services institution to an individual, the smart card comprising memory sufficient to hold a database. According to the present invention, in addition to comprising data relating to the individual's relationship with the financial services institution, the database further comprises personal data for the individual. The data relating to the individual may be accessed and used by the financial services institution in connection with the individual's account or accounts. The personal data may be made accessible to data networks of civil agencies, such as police departments, fire departments, hospitals and/or other such agencies. In certain embodiments, the personal data may also be accessed and stored by the financial services institution's network, for example in a database field linked to the individual's data.

In aspects of the present invention, appropriate security measures are utilized to safeguard the maintenance and/or release of the identification data and/or personal data. Release of the identification data and/or personal data may be limited to civil agencies and/or other individuals approved by a customer of the financial services institution and/or by any applicable governmental regulations.

An advantage of the systems and methods of the present invention is that the computer networks and data handling capabilities of the financial services industry are used to further the efforts and mission of civil agencies.

Another advantage of the systems and methods of the present invention is that the systems and methods provide added value to the financial services institution, its customers and the public in general.

### Brief Description of the Drawings:

Figure 1 provides a schematic overview of an embodiment of the present invention.
Figure 2 provides a schematic illustration of a use of an embodiment of the present invention.
Figure 3 illustrates an embodiment of the present invention comprising a card issued by a financial services institution.

### Detailed Description of the Present Invention:

As set forth above, the present invention provides methods and systems for identifying individuals.

A system of the present invention comprises:
a computer database comprising data relating to a first individual account holder of a financial services institution and further comprising identification data of at least a second individual, the database being maintained on a computer network of the financial services institution; and
electronic transmission means for transmitting the identification data of the second individual to a second computer network of a party other than the financial services institution; wherein a user of the second computer network may access the identification data to assist the user in identifying the second individual.
The system of the present invention may further comprise a card issued by the financial services institution, the card comprising at least a portion of the identification data of the second individual.

Another embodiment of a system of the present invention comprises:
a card issued by a financial services institution to a first individual account holder of the financial services institution, the card comprising identification data for at least a second individual.

The identification data for the second individual may comprise one or more of the following types of data: digitized photographic images, biometric data, finger print data, footprint data and/or digitized voice data. A variety of methods are known in the art for capturing these types of data and digitizing the data for storage in a computer system.

In additional embodiments of the present invention, the computer database of the financial services institution further comprises identification data for a plurality of individuals, including the second individual and other individuals. The identification data may be the same or different for each of the plurality of individuals. Thus, for example, an individual account holder of the financial services institution may elect to have identification data for all other members of their family stored in the database records of the financial services institution for their accounts.

A further embodiment of a system of the present invention comprises:
a computer database comprising data relating to an individual account holder of a financial services institution and further comprising personal data of the individual, the database being maintained on a computer network of the financial services institution; and
electronic transmission means for transmitting the personal data of the individual to a computer network of a party other than the financial services institution; wherein a user of the second computer network may access the personal data.
The system of the present invention may further comprise a card issued by the financial services institution, the card comprising at least a portion of the personal data of the individual.

Personal data include, but are not limited to: health care data; next of kin data; insurance data; identification data, and the like.

Financial services institution is used herein in a manner consistent with its usage in the art to comprise banking institutions, accounting institutions, brokerages, insurance institutions, consumer finance institutions and the like. A general discussion of the types and handling of data generally maintained in the database records of a financial institution may be found in: US Patent No. 6,029,153, issued February 22, 2000, entitled "Method and System for Analyzing and Handling the Customer Files of a Financial Institution" and US Patent No. 5,866,889, issued February 2, 1999, entitled "Integrated Full Service Consumer Banking System and System and Method for Opening an Account." The disclosure of each of these patents is hereby incorporated herein by reference.

As set forth above, and discussed in detail in US patent No. 5,866,889, an integrated customer account in a financial services institution may comprise investment services, transactional banking services, securities, secured loans, unsecured loans, annuities, credit cards, insurance components and/or retirement components. Data relating to the customer's use of one or more of these services is maintained in a database on the financial services institution's computer network. In a system of the present invention the customer database record further comprises identification data for at least one individual other than the customer and/or personal data.

In an embodiment of the present invention the second computer network that receives the identification and/or personal data for the second individual is a computer network of a civil agency. Civil agency is used herein to refer to law enforcement agencies; healthcare institutions, including hospitals and emergency medical teams; fire departments and similar agencies that are charged with protecting and/or assisting the public. A general discussion of an example of a type of computer network utilized by civil agencies may be found in US Patent No. 5,761,278, issued June 2, 1998, entitled "Integrated Data Collection And Transmission For 9-1-1 Calls For Service." The disclosure of this patent is also hereby incorporated herein by reference.

As discussed in US Patent No. 5,761,278 a network of the type utilized by civil agencies may comprise a central server and remote terminals. In a system of the present invention, identification and/or personal data from the database of a financial services institution is transmitted to the network of a civil service agency where it is then utilized, and retransmitted as necessary, to assist the civil service agency, for example in identifying an individual. Methods and systems for transmitting data to civil service agency networks exist in the security field and are discussed, for example, in US patent No. 6,049,272, issued April 11, 2000, entitled "Automated Data Transmission Link to Law Enforcement and Security Personnel", the disclosure of which is hereby incorporated herein by reference. Systems and methods of the present invention may utilize similar data transmitting and handling techniques.

The electronic transmission means include, but are not limited to, the types of transmission means ordinarily utilized by computer networks, in particular global, national, and local area networks. These transmission means may include one or more of the following: fiber optic lines; electric cables; telephone transmission lines; cellular transmissions; radio frequency transmissions; satellite transmissions; laser and infrared based transmissions and the like.

General techniques for transmitting data that may be utilized in systems and methods of the present invention are known in the art. An example of a technique that may be utilized in transmitting data is disclosed in commonly assigned, copending, US patent application serial number 09/557,503, filed April 25, 2000 by Zahorik et al., entitled "Method and System for Tunneling Messages Through Routing and Settlement Systems of a Financial Institution", the disclosure of which is hereby incorporated herein by reference. This application describes the transmitting of messages comprising a plurality of data fields. The identification and/or personal data in a system of the present invention may comprise one or more of the data fields.

In addition to civil agencies, it may be advantageous to permit personal or identification data to be accessible to certain private party networks. These private party networks may comprise one or more of the following types of networks: private health care networks; educational institution networks; insurance industry networks and the like. For example, in a particular embodiment of the present invention, the personal data may comprise health care data and health insurance data. These types of data may be made accessible to private health care networks, including, for example, private hospitals or physicians.

In an embodiment of a system and/or a method of the present invention, the parties who will be given access to the personal and/or identification data may be specified by an individual at the time of creating the database record(s). The systems and methods will then limit release and distribution of the data to the specified parties utilizing techniques known in the art.

In embodiments of the present invention utilizing a card, the card issued by the financial services institution may comprise a credit card, debit card, ATM (automated teller machine) card, smart card, prepaid card or a similar card. Techniques for producing and including data on these types of cards are generally known in the art. In an embodiment of the present invention the identification data for the second individual may comprise a photograph of the second individual and the card comprise the photograph or a digitized facsimile of the photograph. In alternate embodiments of the present invention the identification data for the second individual may comprise biometric data, a finger print, a voice print or the like. This type of data may also be included on the card, either directly on the surface of the card and/or as part of the magnetically or optically readable strip portion of the card. In the case of a smart card, the identification data may reside in a portion of the memory of the card and/or in other locations on the smart card. In embodiments of the present invention utilizing personal data, a portion of the personal data may be stored on the card, and/or accessed in the records of the financial services institution through use of the card.

In an embodiment of the present invention that includes a card with identification data, the card may be utilized in conjunction with the identification data maintained in the financial services institution's database, or independently. For example, a photograph of the second individual on the card may be shown and viewed directly by a person seeking to identify the second individual.

A method of the present invention for identifying an individual comprises:
creating identification data for the individual in electronic form;
storing the identification data in a financial service institution's computer network database in a database record associated with a customer of the financial service institution;
transferring the identification to a person seeking to identify the individual; and
comparing the individual to be identified to the identification data to determine whether the individual to be identified is in fact the individual represented by the identification data.
A method of the present invention may further comprise storing at least a portion of the identification data for the individual on a card issued by the financial service institution to the customer of the financial service institution. In this embodiment, the method may still further comprise comparing the identification data stored on the card to the individual to be identified.

Another embodiment of a method of the present invention for identifying an individual comprises:
creating identification data for the individual;
placing the identification data on a card issued by a financial service institution to a customer of the financial service institution;
providing the card with the identification to a person seeking to identify the individual; and
comparing the individual to be identified to the identification data to determine whether the individual to be identified is in fact the individual represented by the identification data.

A further method of the present invention for providing access to an individual's personal data comprises:
creating personal data for the individual in electronic form;
storing the personal data in a financial service institution's computer network database in a database record associated with the individual; and
providing access to the personal data to at least a second individual for use by the second individual.

A method of the present invention may further comprise storing at least a portion of the personal data for the individual on a card issued by the financial service institution to the individual. In this embodiment, the method may still further comprise accessing the personal data stored on the card.

Further details about the systems and methods of the present invention are set forth below with reference to the appended figures.

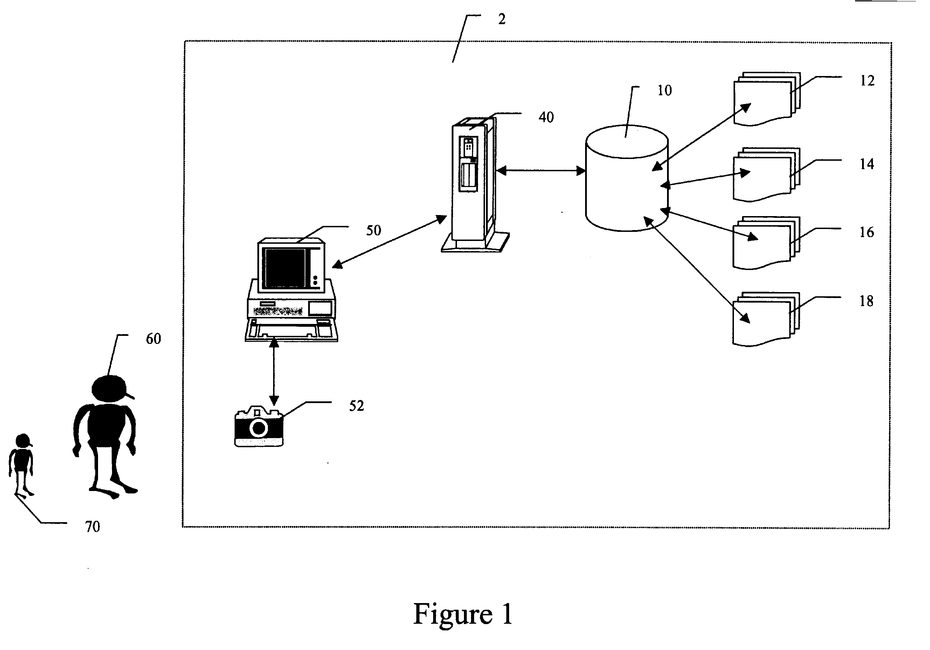

As shown in Figure 1, a financial services institution network, 2 may comprise a main processing system or server, 40 and a remote terminal 50. A customer information database 10, for an individual customer 60, located on a financial services institution main processing system, 40, may include multiple database fields 12, 14, 16, etc. for an individual customer. Database fields 12, 14 and 16 may comprise information relating to the customer's accounts with the financial services institution. For example, database fields 12, 14 and 16 may include information about the customer's checking, saving and credit card account respectively. As will be appreciated, the database may include a great deal of additional information relating to the customer and the customer's accounts, the fields shown in Figure 1 are provided by way of example to assist in describing the present invention. Information and data may be added to the customer information database 10 through a variety of sources. As shown in Figure 1, the main processing system 40 may be connected to a remote terminal 50 located at a branch location of the financial services institution. A customer service representative of the financial services institution at the branch location may enter customer data into the main processing system for inclusion in the customer information database 10.

In a system of the present invention, customer information database 10 comprises identification data for an individual, 70, other than the customer 60. This identification data is shown in Figure 1 as database field 18 of customer information database 10. The identification data 18 may comprise one or more of the following types of data for the individual other than the customer: a photographic image or images; biometric data, e.g. eye scan data; finger print data; foot print data; and/or digitized voice data. The identification data further includes at least one or more of the following types of data relating to the individual other than the customer: name; address; telephone number, emergency medical information; next of kin; and/or emergency contact information. The identification data is linked so, for example, the finger print data is associated with the second individual's name, address, phone number etc. The identification data may be compressed, encrypted or treated in other manners known to the art for handling within the financial services industry's computer network.

By way of example, customer 60 may be a mother and individual 70, her child. A customer service representative, at a branch location of the financial services institution, could use a digital camera, 52 to capture a photographic image of the child 70. This photographic image, together with biographical and contact information for the child, could be transferred from the camera to remote terminal 50, through main processing system 40 and become at least a portion of field 18 of customer information database 10 for customer 60.

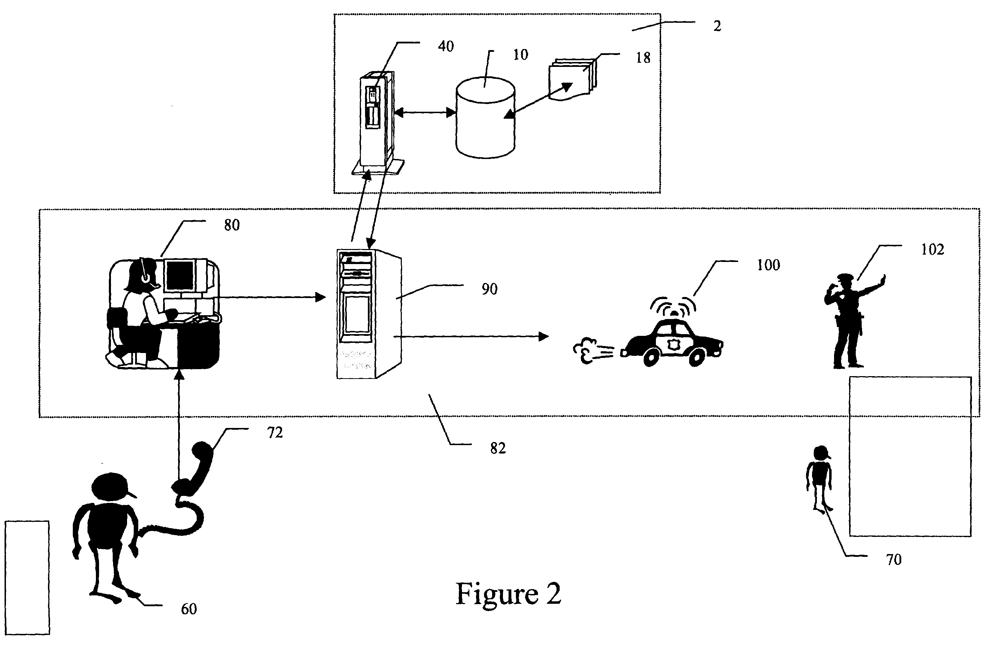

Figure 2 illustrates the possible use of the embodiment of the present invention depicted in Figure 1. As shown in Figure 2, if mother 60 and child 70 become separated, the mother may contact a local law enforcement agency 80, for example through a 911 service over the telephone 72. The local law enforcement agency 80 is connected to a law enforcement processing system or server 90 and is part of a law enforcement computer network 82. Upon receipt of the notice of the lost child 70, the local law enforcement agency 80 makes a request for identification data 18 through the law enforcement processing system 90. The law enforcement processing system connects to the financial services institution processing system 40 and forwards the request for identification data 18. As will be recognized by those of ordinary skill in the art, appropriate security measures may be utilized to verify the authenticity and source of the request for identification data before further processing.

After receiving the request for identification data 18 from the law enforcement agency processing system 90, the financial services institution processing system 40, queries customer database 10 to obtain identification data 18. The identification data is then passed back through the communication links to the law enforcement agency processing system 90. The law enforcement processing system 90 may forward the identification data to a remote mobile data terminal in police car 100 where it can be utilized by policeman 102 to identify the lost child 60.

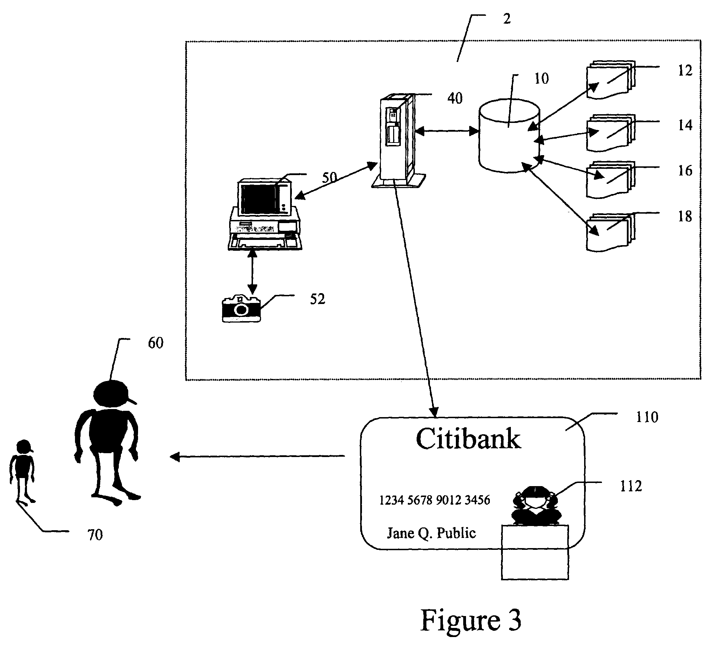

Figure 3, illustrates an alternate embodiment of the present invention. As shown in Figure 3, in addition to being maintained in customer database 10, at least a portion of identification data 18, for example a photographic image 112 of child 70 may be placed on a credit/smart/ATM/debit card issued by the financial services institution for the customer 60. The photograph may be utilized independently or together with other identification data 18 for identifying child 70.

Although the Figures illustrate the use of a photographic image in methods and systems of the present invention, as explained herein, other types of identification data may be utilized in a similar fashion.

It will be appreciated by those of ordinary skill in the art that the development of specific implementations of the present invention would be a routine undertaking of software engineering for those of ordinary skill having the benefit of this disclosure.

Further details and advantages of the present invention are illustrated by the following Example.

### Example:

By way of example, the present invention could be implemented in the following manner.

A financial services institution, through a promotional offering, could offer its customers the opportunity to include their child's picture and/or biometric data on a card issued by the financial services institution. The customer would bring the child to a customer service center where the child's photograph and/or biometric data is taken and digitized. The child's data is compressed and stored as part of the customer's file in the financial services institution's database, or in a separate database accessible by the financial services institution. In addition, a print of the digitized image is placed on the customer's card.

When needed the customer could call the financial services institution and ask that their child's identifying information be released. For example the customer could call credit card services and inform the customer service representative that their child is missing. The customer service representative would access the child's identification data using the customer's records. The child's identifying information is then transferred to a network that is utilized by law enforcement agencies where the identification data could be retrieved by law enforcement personnel on mobile data terminals looking for the child.

As will be appreciated by the foregoing description, the concepts behind the present invention may be applied to other types of data, for example a customer's health data. Broadly construed, the present invention includes the use of the computer hardware/software/network infrastructure of the financial services industry to store and retrieve non-financial data important to a customer.

## Claims

1. A system comprising:
a computer database comprising data relating to a first individual account holder of a financial services institution and further comprising identification data of at least a second individual, the database being maintained on a computer network of the financial services institution; and
electronic transmission means for transmitting the identification data of the second individual to a second computer network of a party other than the financial services institution; wherein a user of the second computer network may access the identification data to assist the user in identifying the second individual.

2. The system of claim 1 further comprising a card issued by the financial services institution, the card comprising at least a portion of the identification data of the second individual.

3. A card issued by a financial services institution to a first individual account holder of the financial services institution, the card comprising identification data for at least a second individual.

4. The system of claim 1 wherein the identification data for the second individual comprises one or more of the following types of data: digitized photographic images, biometric data, finger print data, footprint data and/or digitized voice data.

5. The system of claim 3 wherein the identification data for the second individual comprises one or more of the following types of data: digitized photographic images, biometric data, finger print data, footprint data and/or digitized voice data.

6. The system of claim 1 wherein the identification data for the second individual comprises a photograph.

7. The system of claim 3 wherein the identification data for the second individual comprises a photograph.

8. The system of claim 1 wherein the second computer network is a computer network of a civil service agency.

9. The system of claim 8 wherein the civil service agency is a law enforcement agency.

10. The system of claim 1 wherein the computer database of the financial services institution further comprises identification data for a plurality of individuals, including the second individual and other individuals.

11. A system comprising:
a computer database comprising data relating to an individual account holder of a financial services institution and further comprising personal data of the individual, the database being maintained on a computer network of the financial services institution; and
electronic transmission means for transmitting the personal data of the individual to a computer network of a party other than the financial services institution; wherein a user of the second computer network may access the personal data.

12. The system of claim 11 wherein the personal data comprises one or more of the following data: health care data; next of kin data; insurance data; and/or identification data.

13. The system of claim 11 further comprising a card issued by the financial services institution, the card comprising at least a portion of the personal data of the individual.

14. The system of claim 12 further comprising a card issued by the financial services institution, the card comprising at least a portion of the personal data of the individual.

15. A method for identifying an individual comprising:
creating identification data for the individual in electronic form;
storing the identification data in a financial service institution's computer network database in a database record associated with a customer of the financial service institution;
transferring the identification to a person seeking to identify the individual; and
comparing the individual to be identified to the identification data to determine whether the individual to be identified is in fact the individual represented by the identification data.

16. The method of claim 11 wherein the step of creating identification data comprises taking a digital photograph of the individual.

17. The method of claim 11 further comprising storing at least a portion of the identification data for the individual on a card issued by the financial service institution to the customer of the financial service institution.

18. A method for identifying an individual comprising:
creating identification data for the individual;
placing the identification data on a card issued by a financial service institution to a customer of the financial service institution;
providing the card with the identification to a person seeking to identify the individual; and
comparing the individual to be identified to the identification data to determine whether the individual to be identified is in fact the individual represented by the identification data.

19. A method for providing access to an individual's personal data comprising:
creating personal data for the individual in electronic form;
storing the personal data in a financial service institution's computer network database in a database record associated with the individual; and
providing access to the personal data to at least a second individual for use by the second individual.
